# EUROPÄISCHE PATENTSCHRIFT

(11) **EP 0 308 620 B1**
(45) Veröffentlichungstag und Bekanntmachung des Hinweises auf die Patenterteilung: **01.06.1994**
(21) Anmeldenummer: 88112086.9
(22) Anmeldetag: 27.07.1988
(51) Int. Cl.: F16B 13/06

(54) **Spreizdübel**
Expansion dowel
Piston à expansion

(30) Priorität: 22.09.1987 DE 3731819
(43) Veröffentlichungstag der Anmeldung: 29.03.1989
(73) Patentinhaber: HILTI Aktiengesellschaft, 9494 Schaan (LI)
(72) Erfinder: Bergner, Arndt, D-8000 München 70 (DE)
(74) Vertreter: Wildi, Roland

(56) Entgegenhaltungen:
- EP-A- 0 163 152
- EP-A- 0 218 932
- AT-B- 261 174
- AT-B- 301 134
- DE-A- 3 146 027
- DE-B- 2 221 267

## Beschreibung

Die Erfindung betrifft einen Spreizdübel mit einem Ankerbolzen, an dessen zylindrischem Schaft sich eine in Setzrichtung erweiternde kegelige Erweiterung anschliesst und der Schaft an dem dieser Erweiterung abgewandten Ende Angriffsmittel zur Lastaufnahme trägt, wobei der Ankerbolzen von einer relativ dazu verschiebbaren, zumindest teilweise vom setzrichtungsseitigen Ende her längsgeschlitzten Spreizhülse umgeben ist, deren Innendurchmesser dem Aussendurchmesser des Schaftes entspricht und die Spreizhülse an ihrem in Setzrichtung vorderen Ende einen umlaufenden Schneidzahn und sich daran anschliessende, weitere Schneidzähne aufweist, wobei alle Schneidzähne ein im wesentlichen sägezahnförmiges, zum Mantel hin offenes Profil aufweisen und die Spreizhülse eine nutförmige Querschnittsverjüngung zum leichteren Auseinanderspreizen von durch die Längsschlitze der Spreizhülse gebildeten Lappen aufweist.

Ein Spreizdübel der vorgenannten Art ist aus der EP-A-0 218 932 bekannt. Bei diesem bekannten Spreizdübel wird der Ankerbolzen in die längsgeschlitzte Spreizhülse hineingezogen, so dass die Schneidzähne der Spreizhülse in das Aufnahmematerial hineingepresst werden.

Spreizdübel der aus der DE-OS 31 46 027 bekannten Art werden verankert, indem die Spreizhülse unter radialer Aufweitung über die kegelige Erweiterung des sich am Bohrlochgrund abstützenden Ankerbolzens getrieben wird. Der am vorderen Ende der Spreizhülse angeordnete Schneidzahn schafft sich dabei selbst einen Hinterschnitt im Aufnahmematerial. Beim Aufbringen einer Zuglast am Ankerbolzen erfolgt eine Nachspreizung der Spreizhülse. Da die Spreizhülse nur einen einzelnen Schneidzahn aufweist, ist der Energiebedarf zum Vortreiben der Spreizhülse relativ hoch. Somit besteht die Gefahr, dass der Dübel nicht genügend vorgespreizt wird und daher die erforderlichen Verankerungswerte nicht erreicht werden.

Aus der AT-A-261 174 ist ein Spreizdübel bekannt, bei welchem Spreizhülse und Ankerbolzen eine Einheit bilden. Diese Einheit wird über einen sich am Bohrlochgrund abstützenden Kegel getrieben. Zum Abtragen des Aufnahmematerials weist der als Spreizhülse ausgebildete Bereich dieser Einheit Schneidzähne auf.

Der Erfindung liegt die Aufgabe zugrunde, einen Spreizdübel zu schaffen, der mit geringem Energieaufwand setzbar ist und eine sichere Verankerung ermöglicht.

Erfindungsgemäss wird dies dadurch erreicht, dass die kegelige Erweiterung einen grossen Kegelwinkel von etwa 30° aufweist, die Schneidzähne eine in Setzrichtung weisende steilere Flanke aufweisen, die nutfömrige Querschnittsverjüngung entgegen der Setzrichtung unmittelbar an die Schneidzähne angrenzt und die Längsschlitze über die nutförmige Querschnittsverjüngung entgegen der Setzrichtung hinausreichen, wobei die Spreizhülse derart ausgebildet ist, dass sie mit Hilfe eines rohrförmigen Setzwerkzeuges über die Erweiterung des Ankerbolzens getrieben werden kann.

Durch die Anordnung mehrerer Schneidzähne wird das beim Setzvorgang erfolgende Abtragen von Aufnahmematerial an der Bohrlochwandung entsprechend dem Prinzip einer Räumnadel auf die einzelnen Schneidzähne verteilt. Dadurch wird eine Ueberbelastung der Schneidzähne vermieden. Die Verringerung des Energieaufwandes beim Setzvorgang ermöglicht relativ grosse Kegelwinkel an der kegeligen Erweiterung des Ankerbolzens, bis etwa 30°. Dadurch kann der Spreizdübel auch in der gerissenen Zugzone eines Bauwerkes eingesetzt werden, da dank des grossen Kegelwinkels die Spreizkraft begrenzt ist und somit ein durch das Bohrloch verlaufender Riss nicht weiter geöffnet wird. Das sägezahnförmige Profil der Schneidzähne ist so ausgebildet, dass die steilere Flanke in Setzrichtung und die flachere Flanke entgegen der Setzrichtung gerichtet ist.

Um die Verformung der Spreizhülse zu erleichtern, weist die Spreizhülse an dem entgegen der Setzrichtung an die Schneidzähne angrenzenden Bereich eine Querschnittsverjüngung auf. Durch eine solche Querschnittsverjüngung können die durch die Längsschlitze der Spreizhülse gebildeten Lappen ohne grösseren Kraftaufwand beim Auflaufen auf die kegelige Erweiterung des Ankerbolzens nach aussen gebogen werden. Da die Querschnittsverjüngung bei der Belastung des Spreizdübels nur auf Druck beansprucht wird, hat die Querschnittsverjüngung auf den Verankerungswert des Dübels keinen negativen Einfluss.

Für eine günstige Verteilung der beim Abtragen des Aufnahmematerials an der Bohrlochwandung auftretenden Kräfte ist es zweckmässig, ingesamt drei Schneidzähne vorzusehen. Die drei Schneidzähne werden vorzugsweise etwa in gleichen axialen Abständen voneinander angeordnet, so dass beim Setzvorgang jeder Schneidzahn etwa den gleichen Anteil des Aufnahmematerials an der Bohrlochwandung abzutragen hat.

Die Erfindung soll nachstehend anhand der sie beispielsweise wiedergebenden Zeichnungen näher erläutert werden. Es zeigen:
- Fig. 1: einen erfindungsgemässen Spreizdübel im ungespreiztem Zustand,
- Fig. 2: den Spreizdübel gemäss Fig. 1 nach dem Vortreiben der Spreizhülse,
- Fig. 3: den Spreizdübel gemäss Fig. 1 und 2 in fertig verankertem Zustand.

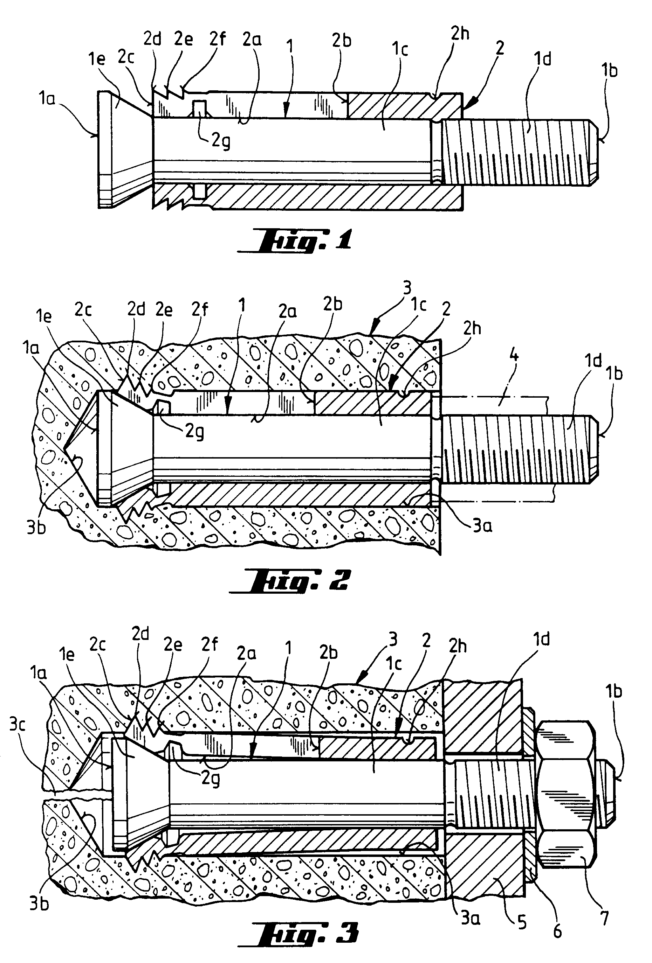

Der aus Fig. 1 bis 3 ersichtliche Spreizdübel besteht aus einem Ankerbolzen 1 und einer diesen umgebenden, gegenüber dem Ankerbolzen 1 axial verschiebbaren Spreizhülse 2. Der Ankerbolzen 1 weist ein in Setzrichtung vorderes Ende 1a und ein rückwärtiges Ende 1b auf. Der mittlere Bereich des Ankerbolzens 1 ist als zylindrischer Schaft 1c ausgebildet. Der rückwärtige Endbereich des Schaftes 1c trägt ein Gewinde 1d als Angriffsmittel zur Lastaufnahme. An den zylindrischen Schaft 1c schliesst sich in Setzrichtung eine kegelige Erweiterung 1e an. Die Konizität der Erweiterung 1e ist relativ gross, wobei der Kegelwinkel etwa 30° beträgt. Die Spreizhülse 2 weist eine Bohrung 2a auf, deren Innendurchmesser etwa dem Aussendurchmesser des Schaftes 1c entspricht. Die Spreizhülse 2 ist mit der radialen Aufweitbarkeit dienenden Längsschlitzen 2b versehen. An ihrem in Setzrichtung vorderen Ende 2c weist die Spreizhülse 2 einen umlaufenden Schneidzahn 2d auf. Entgegen der Setzrichtung sind am Mantel der Spreizhülse 2 zwei weitere Schneidzähne 2e, 2f angeordnet. Die Schneidzähne 2d, 2e, 2f weisen ein im wesentlichen sägezahnförmiges, zum Mantel hin offenes Profil auf, wobei die steilen Flanken gegen das vordere Ende 2c und die flachen Flanken entgegen der Setzrichtung gerichtet sind. In dem entgegen der Setzrichtung an die Schneidzähne 2d, 2e, 2f angrenzenden Bereich ist die Spreizhülse 2 mit einer durch eine Ringnut 2g gebildeten Querschnittsverjüngung versehen. Diese Querschnittsverjüngung dient einer besseren Verformung der Spreizhülse beim Setzvorgang. Die Spreizhülse 2 weist an ihrem rückwärtigen Endbereich eine oder mehrere Einprägungen 2h auf, welche auf der Innenseite in das Gewinde 1d eingreifende Vorsprünge schaffen und zum axialen Sichern der Spreizhülse 2 auf dem Ankerbolzen dienen.

In Fig. 2 ist der Spreizdübel in ein Bohrloch 3a eines Aufnahmematerials 3 eingesetzt. Der Ankerbolzen 1 stützt sich dabei mit seinem vorderen Ende 1a am Bohrlochgrund 3b ab. Die Spreizhülse 2 ist mit Hilfe eines rohrförmigen Setzwerkzeuges 4 über die Erweiterung 1e des Ankerbolzens 1 getrieben worden. Die durch die Einprägungen 2h geschaffenen VorSprünge an der Innenseite der Spreizhülse 2 wurden dabei abgeschert. Die Schneidzähne 2d, 2e, 2f greifen in die Wandung des Bohrloches 3a ein und tragen einen Teil des Aufnahmematerials 3 ab. Es entsteht somit eine formschlüssige Verbindung der Spreizhülse 2 mit dem Aufnahmematerial 3. Die Ringnut 2g sowie die Längsschlitze 2b erleichtern das radiale Aufweiten der Spreizhülse 2.

In Fig. 3 ist ein zu befestigendes Bauteil 5 auf das Gewinde 1d des Ankerbolzens 1 aufgesteckt und mittels einer Unterlagscheibe 6 sowie einer auf das Gewinde 1d aufgeschraubten Mutter 7 befestigt. Im Bereich des Bohrloches 3a befindet sich ein Riss 3c im Aufnahmematerial 3. Das Oeffnen dieses Risses 3c ermöglicht ein Einziehen des Ankerbolzens 1 in die im Aufnahmematerial 3 formschlüssig verankerte Spreizhülse 2. Durch die starke Konizität der Erweiterung 1e ist die Sprengwirkung des Spreizdübels auf den Riss 3c gering.

## Patentansprüche

1. Spreizdübel mit einem Ankerbolzen (1), an dessen zylindrischem Schaft (1c) sich eine in Setzrichtung erweiternde kegelige Erweiterung (1e) anschließt und der Schaft (1c) an dem dieser Erweiterung (1e) abgewandten Ende (1b) Angriffsmittel (1d) zur Lastaufnahme trägt, wobei der Ankerbolzen (1) von einer relativ dazu verschiebbaren, zumindest teilweise vom setzrichtungsseitigen Ende her längsgeschlitzten Spreizhülse (2) umgeben ist, deren Innendurchmesser dem Außendurchmesser des Schaftes (1c) entspricht und die Spreizhülse (2) an ihrem in Setzrichtung vorderen Ende (2c) einen umlaufenden Schneidzahn (2d) und sich daran anschließende, weitere Schneidzähne (2e, 2f) aufweist, wobei alle Schneidzähne (2d, 2e, 2f) ein im wesentlichen sägezahnförmiges, zum Mantel hin offenes Profil aufweisen und die Spreizhülse (2) eine nutförmige Querschnittsverjüngung zum leichteren Auseinanderspreizen von durch die Längsschlitze (2b) der Spreizhülse (2) gebildeten Lappen aufweist, dadurch gekennzeichnet, daß die kegelige Erweiterung einen großen Kegelwinkel von etwa 30° aufweist, die Schneidzähne eine in Setzrichtung weisende steilere Flanke aufweisen, die nutförmige Querschnittsverjüngung entgegen der Setzrichtung unmittelbar an die Schneidzähne (2d, 2e, 2f) angrenzt und die Längsschlitze (2b) über die nutförmige Querschnittsverjüngung (2g) entgegen der Setzrichtung hinausreichen, wobei die Spreizhülse derart ausgebildet ist, daß sie mit Hilfe eines rohrförmigen Setzwerkzeuges (4) über die Erweiterung (1e) des Ankerbolzens (1) getrieben werden kann.

2. Spreizdübel nach Anspruch 1, dadurch gekennzeichnet, daß insgesamt drei Schneidzähne (2d, 2e, 2f) vorgesehen sind.

3. Spreizdübel nach Anspruch 1 oder 2, dadurch gekennzeichnet, daß die Querschnittsverjüngung als an der Innenseite der Spreizhülse angeordnete Ringnut (2g) ausgebildet ist.

4. Spreizdübel nach Anspruch 1 oder 2, dadurch gekennzeichnet, daß die Querschnittsverjüngung als an der Außenseite der Spreizhülse angeordnete Ringnut ausgebildet ist.

## Claims

1. Expanding dowel comprising an anchoring pin (1), having adjacent to its cylindrical shaft (1c) a conical widening (1e) in the setting direction, and a shaft (1c) at the end (1b) remote from this widening (1e) with engagement means (1d) for accommodating a load, and that the anchoring pin (1) is encased by an expanding sleeve (2), which is displaceable relative thereto and at least partially longitudinally slotted from the setting end and the inside diameter of which corresponds with the outside diameter of the shaft (1c), and that the expanding sleeve (2) comprises at its front end (2c) in the setting direction a peripheral cutting tooth (2d) with adjoining additional cutting teeth (2e, 2f), in which respect all cutting teeth (2d, 2e, 2f) have a profile which is essentially shaped like a sawtooth and open towards the casing, and that the expanding sleeve (2) comprises a groove-shaped cross-sectional narrowing for easier spreading of flaps formed by the longitudinal slots (2b) of the expansion sleeve (2), **characterised in that** the conical widening is at a wide conical angle of approximately 30°, that the cutting teeth have a steeper flank oriented towards the setting direction, that the groove-shaped cross-sectional narrowing against the setting direction is directly adjacent the cutting teeth (2d, 2e, 2f), and that the longitudinal slots (2b) extend beyond the groove-shaped cross-sectional narrowing (2g) against the setting direction, in which respect the expanding sleeve is arranged in such a manner that it can be driven by means of a tubular setting tool (4) over the widening (1e) of the anchoring pin (1).

2. Expanding dowel according to claim 1, **characterised in that** a total of three cutting teeth (2d, 2e, 2f) is provided.

3. Expanding dowel according to claim 1 or 2, **characterised in that** the cross-sectional narrowing is arranged to be an annular groove (2g) on the inside of the expanding sleeve.

4. Expanding dowel according to claim 1 or 2, **characterised in that** the cross-sectional narrowing is arranged to be an annular groove on the outside of the expanding sleeve.

## Revendications

1. Cheville à expansion, comprenant un boulon d'ancrage (1) dont la tige cylindrique (1c) est suivie d'un élargissement conique (1e) s'élargissant dans la direction de pose, et dont la tige (1c) porte à l'extrémité (1b) opposée audit élargissement (1e), des moyens d'attaque (1d) pour l'application d'une charge, le boulon d'ancrage (1) étant entouré d'une douille d'écartement (2) déplaçable par rapport audit boulon d'ancrage et fendue au moins partiellement dans le sens longitudinal à partir de l'extrémité côté direction de pose, dont le diamètre intérieur correspond au diamètre extérieur de la tige (1c), et la douille d'écartement (2) présentant à son extrémité (2c) antérieure dans la direction de pose, une dent de coupe (2d) circulaire à laquelle succèdent des dents de coupe supplémentaires (2e, 2f), toutes les dents de coupe (2d, 2e, 2f) présentant sensiblement un profil en dents de scie ouvert vers l'enveloppe et la douille d'écartement (2) comportant un rétrécissement de section transversale, en forme de rainure, pour permettre un écartement plus facile de languettes formées par les fentes longitudinales (2b) de ladite douille d'écartement (2), caractérisée en ce que l'élargissement conique présente un grand angle de cône d'environ 30°, que les dents de coupe présentent un flanc plus raide orienté dans la direction de pose, que le rétrécissement de section transversale dans le sens opposé à la direction de pose avoisine immédiatement les dents de coupe (2d, 2e, 2f) et que les fentes longitudinales (2b) dépassent dans le sens opposé à la direction de pose, du rétrécissement (2g) de section transversale, en forme de rainure, la douille d'écartement étant conformée de telle façon qu'elle peut être poussée, à l'aide d'un outil de pose (4), sur l'élargissement (1e) du boulon d'ancrage (1).

2. Cheville à expansion selon la revendication 1, caractérisée en ce qu'elle comporte au total trois dents de coupe (2d, 2e, 2f).

3. Cheville à expansion selon l'une des revendications 1 ou 2, caractérisée en ce que le rétrécissement de section transversale est réalisé sous la forme d'une rainure annulaire (2g) disposée sur la face intérieure de la douille d'écartement.

4. Cheville à expansion selon l'une des revendications 1 ou 2, caractérisée en ce que le rétrécissement de section transversale est réalisé sous la forme d'une rainure annulaire disposée sur la face extérieure de la douille d'écartement.
